# EUROPEAN PATENT SPECIFICATION

(11) **EP 4 156 389 B1**
(45) Date of publication and mention of the grant of the patent: **29.10.2025**
(21) Application number: 21911385.9
(22) Date of filing: 16.12.2021
(51) Int. Cl.: H01M 50/169, H01M 50/152, B23K 37/04, B23K 26/24, B23K 35/02

(54) **JIG FOR MANUFACTURING SECONDARY BATTERY**
EINSPANNVORRICHTUNG ZUR HERSTELLUNG EINER SEKUNDÄRBATTERIE
GABARIT POUR LA FABRICATION D'UNE BATTERIE SECONDAIRE

(30) Priority: 22.12.2020 KR 20200180717
(43) Date of publication of application: 29.03.2023
(73) Proprietor: LG Energy Solution, Ltd., Seoul 07335 (KR)
(72) Inventor: SON, Min Su, Daejeon 34122 (KR)
(74) Representative: Goddar, Heinz J.
(86) International application number: PCT/KR2021/019137
(87) International publication number: WO 2022/139318

(56) References cited:
- JP-A- 2016 002 566
- KR-A- 20130 034 218
- KR-A- 20160 144 016
- KR-A- 20160 144 016
- KR-A- 20200 131 947
- KR-A- 20200 131 947
- KR-B1- 101 509 748
- US-A1- 2013 029 206
- US-A1- 2016 361 782

## Description

### [Technical Field]

### CROSS-REFERENCE TO RELATED APPLICATION

This application claims priority to and the benefit of Korean Patent Application No. 10-2020-0180717 filed in the Korean Intellectual Property Office on December 22, 2020.

The present invention relates to a jig for manufacturing rechargeable batteries, and more specifically, to a jig for manufacturing a rechargeable battery that may prevent a gasket from being damaged by welding in a rechargeable battery including a sealing gasket.

### [Background Art]

Recently, a demand for portable electronic products such as laptop computers, video cameras, mobile phones, and the like is rapidly increasing, and development of electric vehicles, energy storage batteries, robots, and satellites is active, thus many researches on rechargeable batteries used as a driving power source therefor have been performed.

The electrode assembly installed in a battery case is a generating element that is configured with a stacked structure including a positive electrode, a separation membrane, and a negative electrode and that may be repeatedly charged and discharged, and it is classified into a jelly roll type, a stack type, and a stack/folding type. The jelly roll type is a structure obtained by interposing a separation membrane between long sheet-type positive and negative electrodes coated with an active material and then winding it, and the stack type is a structure in which a plurality of positive and negative electrodes with a predetermined size are sequentially stacked while a separation membrane is interposed therebetween, while the stack/folding type is a mixed structure of the jelly roll type and the stack type. Among them, the jelly roll type of electrode assembly has high merits of easy manufacturing and high energy density per unit weight.

The rechargeable battery is classified into a cylindrical battery in which an electrode assembly is installed in a cylindrical metal can, a square-shaped battery in which an electrode assembly is installed in a square-shaped metal can, and a pouch-type battery in which an electrode assembly is installed in a pouch-type case of an aluminum laminate sheet according to shapes of the battery case. Among them, the cylindrical battery has a merit that it has relatively high capacity and has a stable structure.

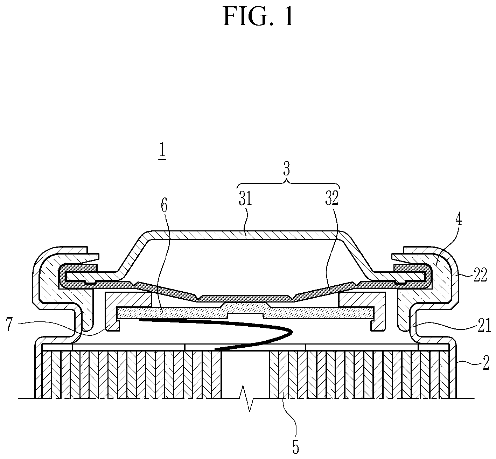

FIG. 1 is a partial cross-sectional view for an upper part of a conventional cylindrical rechargeable battery.

Referring to FIG. 1, a jelly roll-type electrode assembly 5 is accommodated in a cylindrical case 2 and a cap assembly 3 is mounted on an opened upper portion of the cylindrical case 2, thereby a cylindrical rechargeable battery 1 may be manufactured.

The cap assembly 3 includes an upper end cap 31 and an internal pressure reducing safety vent 32, and the upper end cap 31 may be closely attached to the internal pressure reducing safety vent 32.

The safety vent 32 may be electrically connected to an electrode assembly 5 through a current interrupt device (CID) 6. An edge of the current interrupt device 6 may be surrounded by a CID gasket 7.

On the other hand, in relation to the coupling of the cap assembly 3 and the cylindrical case 2, a gasket is positioned between the cap assembly 3 and the cylindrical case 2, and then the upper end part of the cylindrical case 2 is bent to form the crimping combination of the cap assembly 3 and the cylindrical case 2. A crimping part 22 may be formed in the cylindrical case 2 by the crimping coupling. Under the crimping part 22, for stable bonding of the cap assembly 3 and to prevent the flow of the electrode assembly 5, a beading part 21 in which a part of the cylindrical case 2 is recessed in the central direction of the electrode assembly 5 may be formed.

At this time, the gasket 4 is mounted on the inner surfaces of the crimping part 22 and the beading part 21 to increase the sealing property between the cap assembly 3 and the cylindrical case 2 . However, in configuring a battery module or the like by connecting a plurality of cylindrical rechargeable batteries 1, welding may be performed on the upper end cap 31 of the cap assembly 3 or the upper end of the crimping part 22 of the cylindrical case 2. At this time, damage to the gasket 4 may occur due to heat generated during the welding process.

The damaged gasket 4 may cause a deterioration of the sealing ability of the cylindrical rechargeable battery 1, and the electrolyte solution may leak through the gap between the crimping part 22 and the gasket 4 or between the cap assembly 3 and the gasket 4. The leaked electrolyte solution may cause corrosion on the upper surface of the cylindrical rechargeable battery 1, and may also cause a short circuit in the upper part of the cylindrical rechargeable battery 1.

US 2013/029206 A1 discloses a clamp used in battery welding, wherein a cooler is attached to the clamp.

### [Disclosure]

### [Technical Problem]

The problem to be solved by the present invention is to provide a jig for manufacturing a rechargeable battery that can prevent the gasket from being damaged by heat generated during the manufacturing process of the rechargeable battery, particularly the welding.

However, the problem to be solved in the embodiments of the present invention is not limited to the foregoing problem, and may be variously extended within the scope of the appended claims.

### [Technical Solution]

A jig for manufacturing rechargeable batteries according to the invention is defined in claim 1.

A cooling device that circulates the refrigerant into the inside of the jig plate may be further included.

A plurality of pressing parts and the jig plate may include a copper alloy.

The copper alloy may include beryllium copper.

The cylindrical rechargeable battery may include: an electrode assembly; a battery case to which the electrode assembly is housed and having an opened upper part; a cap assembly coupled to the opened upper part of the battery case; a gasket positioned between the battery case and the cap assembly; and a crimping part formed by crimping and coupling the battery case and the cap assembly with the gasket interposed therebetween, and the welding part may be an upper part of the crimping part.

In the welding part, the crimping part and the connecting member may be coupled.

The connecting member may be electrically connected to a negative electrode of the electrode assembly.

The connecting member may be a metal wire in a form of a ribbon, and the width of the metal wire is 0.1 mm or more.

### [Advantageous Effects]

According to embodiments of the present invention, when manufacturing the rechargeable battery, even if the welding process is applied to the crimping part of the upper part of the gasket and the temperature rises, it may be cooled quickly, therefore it is possible to prevent the physical deformation of the gasket, which is a polymer material, and it is possible to prevent the gasket from being damaged.

The effects of the present invention are not limited to the foregoing effects, and other non-mentioned effects will be clearly understood by those skilled in the art from the description below.

### [Description of the Drawings]

FIG. 1 is a partial cross-sectional view for an upper part of a conventional cylindrical rechargeable battery.
FIG. 2 is a partial perspective view of a rechargeable battery to which a jig for manufacturing a rechargeable battery according to an embodiment of the present invention may be applied.
FIG. 3 is a partial cross-sectional view showing a part of a cross-section cut along a cutting line A-A' in FIG. 2.
FIG. 4 is a view of a jig plate and a cooling device of a jig for manufacturing a rechargeable battery according to an embodiment of the present invention from an upper side.
FIG. 5 is a view of a jig for manufacturing a rechargeable battery according to an embodiment of the present invention from a front.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the appended claims.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thickness of layers, films, panels, regions, etc., are exaggerated for clarity. In the drawings, for convenience of description, the thickness of layers, films, panels, areas, etc., are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

Further, throughout the specification, the phrase "on a plane" means viewing a target portion from the top, and the phrase "on a cross-section" means viewing a cross-section formed by vertically cutting a target portion from the side.

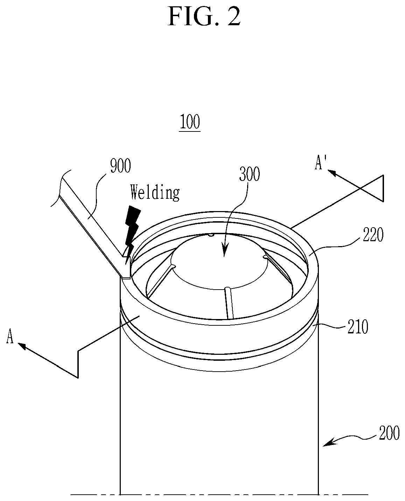

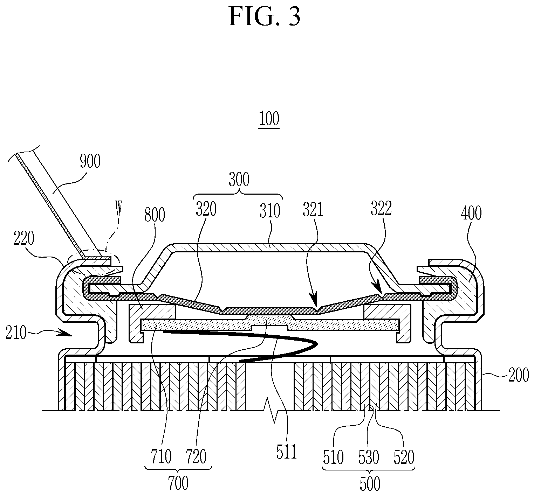

FIG. 2 is a partial perspective view of a rechargeable battery to which a jig for manufacturing a rechargeable battery according to an embodiment of the present invention may be applied. FIG. 3 is a partial cross-sectional view showing a part of a cross-section cut along a cutting line A-A' in FIG. 2.

A jig for manufacturing a rechargeable battery according to the present embodiment is used for pressing and supporting a crimping part 220 and a connecting member 900 in a welding step for welding and bonding the connecting member 900 to the crimping part 220 formed by crimping and coupling a battery case 200 and a cap assembly 300 at an upper part of the rechargeable battery. The rechargeable battery 100 obtained by this includes an electrode assembly 500, a battery case 200 in which the electrode assembly 500 is accommodated and the upper part is opened, a cap assembly 300 is coupled to the opened upper part of the battery case 200, and a gasket 400 positioned between the battery case 200 and the cap assembly 300.

The electrode assembly 500 may be formed of a jelly roll type of electrode assembly having a structure in which a separator 530 is interposed between a positive electrode 510 and a negative electrode 520 of a long sheet shape and then wound. However, it is not limited thereto, and it may be formed of a stack-type electrode assembly consisting of unit cells having a structure in which rectangular positive and negative electrodes are stacked with a separator interposed therebetween, a stack-folding type in which the unit cells are wound by a long separation film, or a lamination-stack type of electrode assembly in which the unit cells are stacked with a separator interposed therebetween and attached to each other.

The cap assembly 300 includes an upper end cap 310 and a safety vent 320, and the upper end cap 310 is positioned on the safety vent 320 and forms a structure in close contact with the safety vent 320 to be electrically connected. The upper end cap 310 is protruded upward on the center and is electrically connected to the positive electrode 510 of the electrode assembly 500 through a positive tab 511 or the like, thereby performing a function as a positive terminal by the connection with an external circuit.

In addition, a negative electrode tab (not shown) may be attached to the bottom of the electrode assembly 500 and connected to the bottom of the battery case 200. As above-described, since the negative electrode 520 is electrically connected to the battery case 200, as described later, by welding and connecting the connecting member 900 to the crimping part 220 of the battery case 200, it functions as a negative terminal by the connection with the external circuit.

The battery case 200 may have a cylindrical shape and may include a beading part 210 and the crimping part 220.

The beading part 210 refers to a portion in which a part of the battery case 200 is recessed in the central direction of the electrode assembly 500 and is for the stable couple of the cap assembly 300 and preventing the flow of the electrode assembly 500. Here, the central direction of the electrode assembly 500 may mean a radius direction from the external circumferential surface of the jelly roll-shaped electrode assembly 500 to the center.

The crimping part 220 refers to a portion positioned at the upper portion of the beading part 210 to surround the cap assembly 300 and is for stable coupling of the cap assembly 300. Specifically, the battery case 200 and the cap assembly 300 may be crimping-coupled with the gasket 400 interposed therebetween, so that the crimping part 220 may be formed on the battery case 200. That is, by positioning the gasket 400 between the battery case 200 and the cap assembly 300 and bending the end of the battery case 200, the crimping part 220 is formed. Through this, mounting of the cap assembly 300 and the sealing of the rechargeable battery 100 may be achieved. The gasket 400 is mounted on the inner surface of the crimping part 220 and the beading part 210 to increase the sealing force between the cap assembly 300 and the battery case 200.

On the other hand, a current interrupt device (CID) 700 and a CID gasket 800 may be positioned under the safety vent 320. The safety vent 320 is a thin film structure through which current passes, and two indentations 321 and 322 having different depths, respectively, may be formed.

The current interrupt device 700 is a member of a conductive plate and may include an exterior circumference part 710 and a blocking part 720 surrounded by the exterior circumference part 710. In addition, although not specifically illustrated, a plurality of through holes for discharging gas may be formed. In an abnormal operation situation, when the pressure inside the rechargeable battery 100 rises, the blocking part 720 is separated from the exterior circumference part 710, and the electrical connection between the external circuit and the electrode assembly 500 may be blocked.

The CID gasket 800 is a member that surrounds the edge of the current interrupt device 700 and may prevent the safety vent 320 from contacting the exterior circumference part 710.

On the other hand, when the rechargeable battery 100 is gathered in several pieces to form a battery module or a battery pack, a connecting member 900 of a metal material may be welded as a negative connecting member to the upper part of the crimping part 220 of the battery case 200. That is, a welding part W is formed at the portion where the upper portion of the crimping part 220 and the connecting member 900 are coupled. In addition, a positive connecting member (not shown) may be welded and connected to the central upper portion of the upper end cap 310.

There is no particular limitation on the welding method, and ultrasonic welding, laser welding, or resistance welding may be performed. Recently, in order to manufacture a high performance and high power battery module, the width and the thickness of the connecting member 900 of the metal material to be welded with the rechargeable battery 100 has been increased, and in this case, strong welding conditions are required to weld the connecting member 900 of the metal material with increased thickness and width to the upper part of the crimping part 220. For example, the connecting member 900 may be a metal wire in a form of a ribbon, and the thickness of the connecting member 900 may be 0.1 mm or more. For example, it may be 0.1 mm or more and 20 mm or less, and preferably 10 mm or less. In addition, the width of the connecting member 900 may be 0.1 mm or more, for example, 0.1 mm or more and 20 mm or less, and preferably 10 mm or less. However, when welding under the strong welding conditions for the coupling of the connecting member 900 with increased thickness and width as described above, high heat is generated in the process, which may cause damage to the gasket 400 adjacent to the welding part. The damaged gasket 400 may cause a deterioration of the sealing ability of the rechargeable battery 100, and may cause a problem of an electrolyte solution leaking into the gap between the crimping part 220 and the gasket 400 or between the cap assembly 300 and the gasket 400.

The gasket 400 according to the present embodiment includes a polymer material and a resin, and may be manufactured by injection molding. Specifically, polyolefin-based materials such as polyethylene, polypropylene, and polyisobutylene, or polybutylene terephthalate (PBT), polyphenylene sulfide (PPS), perfluoroalkoxy (PFA), and the like, may be included. Particularly, polybutylene terephthalate (PBT) is an elastomer with good elasticity, and it is easy to mold the gasket 400 because an injection property is improved when this material is included. In addition, it has high melting point and high stability may be obtained at a high temperature.

When the jig for manufacturing the rechargeable battery according to the present embodiment is applied, even if the strong welding with the connecting member 900 of the metal material is performed at the crimping part 220 near the gasket 400, the gasket 400 may be prevent from being damaged and the sealing ability of the gasket 400 may be maintained, thereby preventing the electrolyte solution from being leaked.

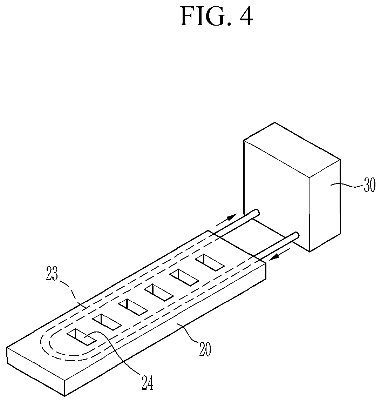

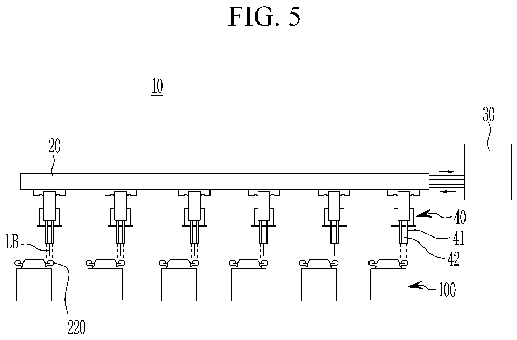

Hereinafter, the configuration of the jig for manufacturing the rechargeable battery is described in detail with reference to FIG. 4 and FIG. 5.

FIG. 4 is a view of a jig plate and a cooling device of a jig for manufacturing a rechargeable battery according to an embodiment of the present invention from an upper side. FIG. 5 is a view of a jig for manufacturing rechargeable batteries according to an embodiment of the present invention from a front.

As shown in FIG. 4 and FIG. 5, the jig 10 for manufacturing the rechargeable battery according to an embodiment of the present invention includes a plurality of pressing parts 40 for pressing the surroundings of the welding part W of the cylindrical rechargeable battery 100, and a jig plate 20 supporting a plurality of pressing parts 40 and including a flow path 23 for circulating a refrigerant therein.

A plurality of pressing parts 40 may include a cylindrical body part 41 and a transmission part 42 surrounded by the body part 41 and formed to correspond to the welding part W. The laser beam LB irradiated through the transmission part 42 reaches the welding part W, so that the welding may be performed. In this process, the body part 41 is fixed by pressing the circumference of the welding part W.

A plurality of pressing parts 40 may be formed of a metal having high thermal conductivity. For example, it may include a copper alloy such as beryllium copper. Particularly in the case of beryllium copper, since it has high strength and simultaneously high thermal conductivity, the heat generated during the welding may be efficiently transferred from the welding part W to the jig plate 20 while maintaining the strength of the pressing part 40.

The jig plate 20 is disposed to support a plurality of pressing parts 40. For example, as shown in FIG. 5, a plurality of pressing parts 40 are disposed to be attached to the lower part of the jig plate 20 having a plate shape. In this case, a plurality of transmission holes 24 corresponding to each transmission part 42 of a plurality of pressing parts 40 are formed in the jig plate 20. Therefore, by irradiating the laser beam LB on the jig plate 20, it may sequentially penetrate the transmission hole 24 and the transmission part 42 and then reach the welding part W. However, the welding system in the present invention is not limited thereto, and various systems for welding the negative electrode part of the rechargeable battery may be applied.

In addition, the jig plate 20 may be made of a metal having high thermal conductivity. For example, it may include a copper alloy such as beryllium copper. Particularly in the case of beryllium copper, since it has high strength and simultaneously high thermal conductivity, the heat generated in the welding part W may be efficiently discharged while maintaining the strength of the jig plate 20.

Inside the jig plate 20, the flow path 23 through which a refrigerant can flow is formed. The refrigerant circulating in the flow path 23 may be connected to the external cooling device 30 and circulate. That is, the refrigerant that has absorbed heat inside the jig plate 20 is configured to be cooled in the cooling device 30 and to circulate inside the jig plate 20 again. As such, the heat generated during the welding may be exchanged in the cooling device 30 by the structure in which the refrigerant circulates inside. That is, the refrigerant supplied from the cooling device 30 circulates inside the jig plate 20 to cool the jig plate 20, and as the jig plate 20 is cooled, a plurality of pressing parts 40 attached to the jig plate 20 are cooled. Since a plurality of pressing parts 40 directly contact and pressurize the circumference of the welding part W, the heat generated by the welding part W may be cooled.

With this configuration, even if heat is generated during the welding in the welding part W, it may be quickly transferred to the outside and cooled. That is, heat generated during the welding in the welding part W is sequentially transferred to the welding part W, the circumference of the welding part, the pressing part 40, the jig plate 20, and the refrigerant in flow path 23, and finally cooled by heat exchange in the cooling device 30. Accordingly, it is possible to prevent the gasket 400 positioned under the welding part W from being damaged by heat generated during the welding.

In the case of the rechargeable battery 100 manufactured by applying such a jig 10 for manufacturing the rechargeable battery, the damage to the gasket 400 due to the welding may be prevented, so It is possible to prevent the electrolyte solution from leaking through the gap between the crimping part 220 and the gasket 400 or the gap between the cap assembly 300 and the gasket 400. In addition, while preventing the damage to the gasket 400 as described above, the thickened connecting member 900 may be firmly coupled to the battery case 200 for higher output, and then an electrical connection with the outside may also be stably achieved. In addition, since the welding is possible without the damage to the gasket 400 due to heat, it is possible to arrange the rechargeable battery 100 in one direction and weld it. When performing the welding by arranging it in one direction, a bus bar may be minimized, the cooling structure of the module in which a plurality of rechargeable batteries 100 are disposed may be improved, and there is a merit that no additional parts are required for changing the polarity of the electrode.

In the present exemplary embodiment, terms indicating directions, such as front, rear, left, right, up, and down, are used, but these terms are for convenience of explanation only, and may vary depending on the location of the object or the position of the observer.

The rechargeable battery manufactured by applying the jig for manufacturing the rechargeable battery according to the present embodiment described above may be gathered in a plurality to form a battery module. Such a battery module may be mounted together with various control and protection systems such as a battery management system (BMS) and a cooling system to form a battery pack.

The rechargeable battery, the battery module, or the battery pack may be applied to various devices. Specifically, the battery module or battery pack may be applied to transportation means such as an electric bicycle, an electric vehicle, and a hybrid vehicle, but is not limited thereto, and the battery module or battery pack may be applied to various devices that can use a secondary battery.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

### [Description of Reference Numerals]

10: a jig for manufacturing a rechargeable battery
20: jig plate
23: flow path
30: cooling device
40: pressing part
100: rechargeable battery
200: battery case
300: cap assembly
400: gasket
500: electrode assembly

## Claims

1. A jig (10) for manufacturing rechargeable batteries, comprising:
a plurality of pressing parts (40) for pressing a circumference of a welding part (W) of a respective one of cylindrical rechargeable batteries; and
a jig plate (20) supporting the plurality of pressing parts (40) and including a flow path (23) for circulation of a refrigerant therein,
wherein the plurality of pressing parts (40) each include a transmission part (42) that transmits a laser beam corresponding to the respective welding part (W),
wherein the jig plate (20) includes a plurality of transmission holes (24) respectively corresponding to the transmission part (42) of each of the plurality of pressing parts (40),
wherein the plurality of pressing parts (40) are attached to the lower part of the jig plate (20) having a plate shape.

2. The jig of claim 1, further comprising
a cooling device (30) that circulates the refrigerant into the inside of the jig plate (20).

3. The jig of claim 1, wherein the plurality of pressing parts (40) and the jig plate (20) include a copper alloy.

4. The jig of claim 3, wherein the copper alloy includes beryllium copper.

5. A system comprising cylindrical rechargeable batteries and the jig of claim 1, wherein each battery includes:
an electrode assembly (500);
a battery case (200) in which the electrode assembly (500) is housed and having an opened upper part;
a cap assembly (300) coupled to the opened upper part of the battery case (200);
a gasket (400) positioned between the battery case (200) and the cap assembly (300); and
a crimping part (220) formed by crimping and coupling the battery case (200) and the cap assembly (300) with the gasket (400) interposed therebetween, and
the welding part (W) is an upper part of the crimping part (220).

6. The system of claim 5, configured so that in the welding part (W), the crimping part (220) and a connecting member (900) are coupled.

7. The system of claim 6, configured so that the connecting member (900) is electrically connected to a negative electrode (520) of the electrode assembly (500).

8. The system of claim 6, configured so that the connecting member (900) is a metal wire in a form of a ribbon, and the width of the metal wire is 0.1 mm or more.

## Patentansprüche

1. Spannvorrichtung (10) zur Herstellung von wiederaufladbaren Batterien, aufweisend:
mehrere Pressteile (40) zum Pressen eines Umfangs eines Schweißteils (W) einer jeweiligen von zylindrischen wiederaufladbaren Batterien; und
eine Spannvorrichtungsplatte (20), die die mehreren Pressteile (40) trägt und einen Strömungsweg (23) zur Zirkulation eines Kältemittels darin aufweist,
wobei die mehreren Pressteile (40) jeweils ein Übertragungsteil (42) aufweisen, das einen Laserstrahl entsprechend dem jeweiligen Schweißteil (W) überträgt,
wobei die Spannvorrichtungsplatte (20) mehrere Übertragungslöcher (24) aufweist, die jeweils dem Übertragungsteil (42) jedes der mehreren Pressteile (40) entsprechen,
wobei die mehreren Pressteile (40) an dem unteren Teil der Spannvorrichtungsplatte (20) mit einer Plattenform angebracht sind.

2. Spannvorrichtung nach Anspruch 1, ferner aufweisend
eine Kühlvorrichtung (30), die das Kältemittel ins Innere der Spannvorrichtungsplatte (20) zirkuliert.

3. Spannvorrichtung nach Anspruch 1, wobei die mehreren Pressteile (40) und die Spannvorrichtungsplatte (20) eine Kupferlegierung enthalten.

4. Spannvorrichtung nach Anspruch 3, wobei die Kupferlegierung Berylliumkupfer enthält.

5. System aufweisend zylindrische wiederaufladbare Batterien und die Spannvorrichtung nach Anspruch 1, wobei jede Batterie aufweist:
eine Elektrodenanordnung (500);
ein Batteriegehäuse (200), in dem die Elektrodenanordnung (500) aufgenommen ist und das einen geöffneten oberen Teil aufweist;
eine Kappenanordnung (300), die mit dem geöffneten oberen Teil des Batteriegehäuses (200) gekoppelt ist;
eine Dichtung (400), die zwischen dem Batteriegehäuse (200) und der Kappenanordnung (300) positioniert ist; und
ein Crimpteil (220), das durch Crimpen und Koppeln des Batteriegehäuses (200) und der Kappenanordnung (300) ausgebildet ist, wobei die Dichtung (400) dazwischen angeordnet ist, und
das Schweißteil (W) ein oberer Teil des Crimpteils (220) ist.

6. System nach Anspruch 5, das so konfiguriert ist, dass in dem Schweißteil (W) das Crimpteil (220) und ein Verbindungselement (900) gekoppelt sind.

7. System nach Anspruch 6, das so konfiguriert ist, dass das Verbindungselement (900) elektrisch mit einer negativen Elektrode (520) der Elektrodenanordnung (500) verbunden ist.

8. System nach Anspruch 6, das so konfiguriert ist, dass das Verbindungselement (900) ein Metalldraht in Form eines Bandes ist und die Breite des Metalldrahtes 0,1 mm oder mehr beträgt.

## Revendications

1. Gabarit (10) pour la fabrication de batteries rechargeables, comprenant :
une pluralité de pièces de compression (40) pour presser une circonférence d'une pièce à souder (W) d'une batterie respective de batteries rechargeables cylindriques ; et
une plaque de gabarit (20) supportant la pluralité de pièces de compression (40) et comprenant un chemin d'écoulement (23) pour la circulation d'un réfrigérant dedans,
la pluralité de pièces de compression (40) comprenant chacune une pièce de transmission (42) transmettant un faisceau laser correspondant à la pièce à souder correspondante (W),
la plaque de gabarit (20) comprenant une pluralité d'orifices de transmission (24) correspondant respectivement à la partie de transmission (42) de chacune de la pluralité de pièces de pression (40),
la pluralité de pièces de compression (40) étant fixées à la partie inférieure de la plaque de gabarit (20) en forme de plaque.

2. Gabarit selon la revendication 1, comprenant en outre
un dispositif de refroidissement (30) assurant la circulation du réfrigérant à l'intérieur de la plaque de gabarit (20).

3. Gabarit selon la revendication 1, la pluralité de pièces de compression (40) et la plaque de gabarit (20) comprenant un alliage de cuivre.

4. Gabarit selon la revendication 3, l'alliage de cuivre comprenant du cuivre au béryllium.

5. Système comprenant des batteries rechargeables cylindriques et le gabarit selon la revendication 1, chaque batterie comprenant :
un ensemble d'électrodes (500) ;
un boîtier de batterie (200) contenant l'ensemble d'électrodes (500) et possédant une pièce supérieure ouverte ;
un ensemble de couvercle (300) couplé à la pièce supérieure ouverte du boîtier de batterie (200) ;
un joint (400) positionné entre le boîtier de batterie (200) et l'ensemble du couvercle (300) ; et
une pièce de sertissage (220) formée par sertissage et couplant le boîtier de batterie (200) et l'ensemble de couvercle (300) avec le joint (400) intercalé entre eux, et
la pièce à souder (W) étant une partie supérieure de la pièce de sertissage (220).

6. Système selon la revendication 5, configuré de sorte que dans la pièce à souder (W), la pièce de sertissage (220) et un élément de liaison (900) soient couplés.

7. Système selon la revendication 6, configuré de sorte que l'élément de liaison (900) soit connecté électriquement à une électrode négative (520) de l'ensemble d'électrodes (500).

8. Système selon la revendication 6, configuré de sorte que l'élément de liaison (900) soit un fil métallique en forme de ruban, et que le fil métallique mesure 0,1 mm de large, ou davantage.
